## Europäisches Patentamt

## European Patent Office

## Office européen des brevets

(19)

(11)  EP 0 799 639 B1

(12)  **EUROPÄISCHE PATENTSCHRIFT**

(45) Veröffentlichungstag und Bekanntmachung des Hinweises auf die Patenterteilung:
**26.09.2001 Patentblatt 2001/39**

(51) Int Cl.[7]: **B01J 19/02**, B01J 19/00, C01B 3/02, C23F 15/00

(21) Anmeldenummer: **96120240.5**

(22) Anmeldetag: **17.12.1996**

(54) **Gegen Metal-Dusting-Korrosion geschützte Metallfläche, die eine thermische Isolierschicht aufweist**

Metallic surface having a heat-insulating layer, protected against metal-dusting corrosion

Surface métallique ayant une couche d'isolation thermique, protégée contre la corrosion de type "metal-dusting"

(84) Benannte Vertragsstaaten:
**DE DK FR GB IT NL**

(30) Priorität: **06.04.1996 DE 19613905**

(43) Veröffentlichungstag der Anmeldung:
**08.10.1997 Patentblatt 1997/41**

(73) Patentinhaber: **mg technologies ag**
**60325 Frankfurt am Main (DE)**

(72) Erfinder:
• **Boll, Walter, Dr.**
**60388 Frankfurt am Main (DE)**
• **Hohmann, Friedrich**
**63225 Langen (DE)**
• **Röll, Werner**
**63579 Freigericht (DE)**

(74) Vertreter: **Revesz, Veronika**
**c/o Lurgi AG**
**Abt. Patente, A-VRP**
**Lurgiallee 5**
**60295 Frankfurt/Main (DE)**

(56) Entgegenhaltungen:
**DE-A- 4 327 176    GB-A- 1 178 559**
**US-A- 3 527 288**

• **CHEMICAL ENGINEERING, 6.Januar 1986, NEW YORK US, Seiten 83-87, XP002017649 C. M. SCHILLMOLLER: "Solving high-temperature problems in oil refineries and petrochemical plants"**
• **HYDROCARBON PROCESSING, August 1972, HOUSTON US, Seite 7375 XP002017650 R. C. SCHUELER: "Metal dusting"**

**Beschreibung**

Die Erfindung betrifft eine gegen Metal-Dusting-Korrosion geschützte Metallfläche, welche eine Isolierschicht aus gasdurchlässigem, thermisch isolierendem Material aufweist, wobei sich die im Betrieb kältere Seite der thermischen Isolierschicht in unmittelbarer Nähe der Metalloberfläche befindet und die im Betrieb heißere Seite der Isolierschicht durch einen Gasstrom, der eine Temperatur im Bereich von 300 bis 1700°C aufweist, erhitzt wird.

Aus DE-C-4327176 (dazu korrespondiert US-Patent 5 490 974) ist es bekannt, Metallflächen gegen die Metal-Dusting-Korrosion dadurch zu schützen, daß man in einen Bereich zwischen der Metallfläche und der thermischen Isolierschicht ein weitgehend CO-freies, gas- oder dampfförmiges Schutzmedium einleitet. Der Erfindung liegt die Aufgabe zugrunde, den Schutz gegen die Metal-Dusting-Korrosion einfach und kostengünstig durchzuführen und dabei auf ein von außen zugeführtes Schutzgas zu verzichten. Erfindungsgemäß gelingt dies dadurch, daß im Bereich zwischen der zu schützenden Metallfläche und der heißen Seite der Isolierschicht ein Katalysator zum Umsetzen von Kohlenmonoxid mit Wasserstoff und/oder Wasserdampf angeordnet ist.

Die Metal-Dusting-Korrosion entsteht unter dem Einfluß eines heißen, CO-haltigen Gases dann, wenn das Gas an der Metalloberfläche abkühlt und das CO dadurch aufgrund der Boudouard-Reaktion zu C + $CO_2$ zerfällt. Im Metallgefüge bilden sich auf diese Weise Karbide, welche zur Zerstörung des Gefüges des Werkstoffs führen. Durch Metal-Dusting-Korrosion werden nicht nur Stähle sondern z.B. auch Nickel-Basis-Werkstoffe angegriffen.

Die Intensität des Korrosionsangriffs ist um so höher, je höher der CO-Partialdruck und das molare CO/$CO_2$-Verhältnis an der Metalloberfläche ist. Das Phänomen der Metal-Dusting-Korrosion ist wissenschaftlich noch nicht bis in alle Einzelheiten aufgeklärt, doch weiß man, daß das Potential zur Bildung von freiem Kohlenstoff aus dem Zerfall des CO eine wichtige Rolle spielt. Dieser CO-Zerfall findet unterhalb der Boudouard-Gleichgewichts-Temperatur statt, wobei diese Temperaturgrenze hier kurz auch als Boudouard-Temperatur bezeichnet wird. Die Boudouard-Temperatur steigt mit wachsendem CO-Partialdruck und wachsendem molarem CO/$CO_2$-Verhältnis.

Erfindungsgemäß erfolgt der Schutz der Metallfläche gegen die Metal-Dusting-Korrosion durch das Vorhandensein eines Katalysators. Dieser Katalysator befindet sich auf der zu schützenden Metallfläche oder im Bereich zwischen der Metallfläche und der im Betrieb heißeren Seite der Isolierschicht und insbesondere im Bereich der kalten Seite der Isolierschicht. Durch den Katalysator wird mindestens eine der Reaktionen A oder B

$$(A) \quad CO + 3\,H_2 \rightarrow CH_4 + H_2O$$

$$(B) \quad CO + H_2O \rightarrow CO_2 + H_2$$

gefördert. Durch die lokale Verringerung der CO-Konzentration wird die Boudouard-Temperatur im gefährdeten Bereich gesenkt und so der Zerfall des CO ganz oder weitgehend verhindert.

Im gefährdeten Bereich können bereits geringe Katalysatormengen zum Schutz der Metallfläche ausreichen, weil üblicherweise auch nur relativ geringe Mengen an CO umzusetzen sind. Üblicherweise besteht die thermische Isolierung aus porösem Isolierbeton, porösen Formsteinen oder einer Schicht keramischer Fasern. Eine solche thermische Isolierung läßt sich auf einfache Weise mit der nötigen Konzentration an Katalysator versehen, z.B. durch Imprägnieren mit einer Katalysatorlösung und anschließende Trockung. Möglich ist es auch, dem Isolierbeton vor der Verarbeitung oder dem Material für die Herstellung der Formsteine Katalysator zuzumischen.

Um mindestens eine der oben genannten Reaktionen A oder B zu fördern, können an sich bekannte Katalysatoren verwendet werden. Diese Katalysatoren weisen üblicherweise Übergangselemente der Gruppen VIII, Ib und IVa des Periodensystems der Elemente auf. Insbesondere sind als Katalysatorkomponenten eines oder mehrere der Metalle Nickel, Kupfer, Eisen, Kobalt, Molybdän, Wolfram, Chrom Platin, Palladium, Rhodium oder Ruthenium geeignet.

Durch Metal-Dusting-Korrosion gefährdete Anlagenteile sind z.B. Leitungen oder Kanäle, durch welche Synthesegas strömt, dessen Hauptkomponenten CO und $H_2$ sind. Auch kommen Wärmeaustauscher zum Kühlen von CO-haltigem Gas, z.B. Synthesegas, in Frage. Die Temperaturen an der gefährdeten Metalloberfläche liegen üblicherweise im Bereich von 300 bis 1200°C und die Metallteile sind Drücken von 1 bis 150 bar ausgesetzt. Das heiße Gas, welches die Korrosion hervorruft, hat zumeist einen CO-Gehalt im Bereich von 2 bis 80 Vol.-%.

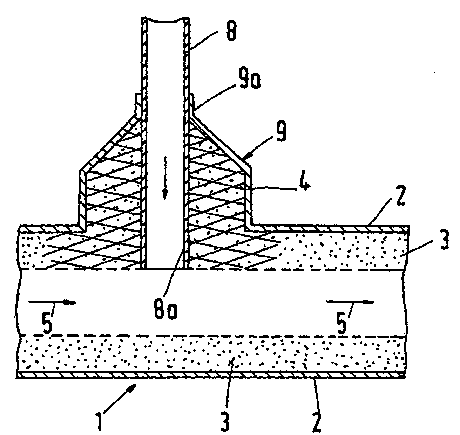

Ausgestaltungsmöglichkeiten für den Korrosionsschutz werden mit Hilfe der Zeichnung erläutert. Sie zeigt den Längsschnitt durch Leitungen, die heißes, CO-haltiges Gas führen.

Eine Sammelleitung (1) weist einen äußeren Stahlmantel (2) auf, der innen mit einer porösen, thermischen Isolierschicht (3) ausgekleidet ist. Im Innern der Leitung (1) strömt heißes, CO-haltiges Gas, wie das durch die Pfeile (5) angedeutet ist.

In die Sammelleitung (1) münden mehrere Einzelleitungen (8), von denen in der Zeichnung nur eine dargestellt ist. Die Einzelleitungen kommen z.B. von einem nicht dargestellten Röhrenofen zur Spaltung von Kohlenwasserstoffen, um rohes Synthesegas mit einem Temperaturbereich von z.B. 800 bis 1000°C zu erzeugen.

Im Mündungsbereich (8a) der Einzelleitung (8) ist der Stahlmantel (2) zu einer Glocke (9) ausgeformt, die mit ihrem oberen Bereich (9a) mit der Leitung (8) verschweißt ist. Zwischen der Glocke (9) und der Außenseite der Leitung (8) befindet sich ebenfalls die poröse thermische Isolierung, welche diesen Bereich ausfüllt. Da besonders die Innenseite der Glocke (9) durch Metal-Dusting-Korrosion gefährdet ist, weist das Isoliermaterial in verteilter Form katalytisch wirksames Metall auf. Der Gehalt an Katalysator in der thermischen Isolierung ist durch eine gekreuzte Schraffur (4) in der Zeichnung hervorgehoben. Wie die Zeichnung ferner zeigt, ist nicht die gesamte thermische Isolierung mit Katalysator versehen, sondern nur der gefährdete Bereich innerhalb der Glocke (9) und der unmittelbar daran angrenzende Bereich. Verständlicherweise versieht man die thermische Isolierung nur dort mit Katalysator, wo man durch Berechnung oder Erfahrung weiß, daß das Metall durch Metal-Dusting-Korrosion angegriffen wird. Die Art und die Konzentration des anzuwendenden Katalysators ermittelt man am besten durch Versuche. Dabei hat sich gezeigt, daß der Katalysator in nur relativ geringen Konzentrationen in der Nähe der gefährdeten Stellen vorliegen muß, um die notwendige Verringerung der CO-Konzentration im dort auftretenden Gas zu erreichen.

In einem Beispiel wurde eine der Zeichnung entsprechende Anordnung untersucht. Das durch die Leitungen (1) und (8) geführte rohe Synthesegas hatte eine Temperatur von 870°C und folgende Zusammensetzung:

| | |
|---|---|
| $CO_2$ | 5,0 Vol.-% |
| CO | 9,9 Vol.-% |
| $H_2$ | 50,1 Vol.-% |
| $CH_4$ | 5,0 Vol.-% |
| $H_2O$ | 30,0 Vol.-% |

Die Isolierschicht (3) bestand aus poröser Tonerde, sie war innerhalb des Bereichs der Glocke (9) mit einer wäßrigen Nickelnitratlösung imprägniert. Die Konzentration des Ni-Katalysators betrug 30 mg Ni pro $cm^3$. Die Gaszusammensetzung unmittelbar an der Innenseite der Glocke (9) wurde durch Sonden ermittelt, dabei wurde festgestellt, daß der CO-Gehalt des Synthesegases entsprechend der Reaktionen (A) und (B) bis auf einen Restgehalt von unter 1 Vol.-% abgebaut wurde. Bei Temperaturen in diesem Bereich von 400 - 600°C war somit die Gefahr der Metal-Dusting-Korrosion nicht gegeben. Ohne den Katalysator entsprach die CO-Konzentration an der Innenseite der Glocke praktisch der Synthesegas-Zusammensetzung, wodurch sich eine Boudouard-Gleichgewichts-Temperatur von 785°C ergibt. Dadurch mußte in diesem Fall mit Metal-Dusting-Korrosion gerechnet werden.

## Patentansprüche

1. Gegen Metal-Dusting-Korrosion geschützte Metallfläche, welche eine Isolierschicht aus gasdurchlässigem, thermisch isolierendem Material aufweist, wobei sich die im Betrieb kältere Seite der thermischen Isolierschicht in unmittelbarer Nähe der Metalloberfläche befindet und die im Betrieb heißere Seite der Isolierschicht durch einen Gasstrom, der eine Temperatur im Bereich von 300 bis 1700°C aufweist, erhitzt wird, **dadurch gekennzeichnet, daß** im Bereich zwischen der zu schützenden Metallfläche und der heißen Seite der Isolierschicht ein Katalysator zum Umsetzen von Kohlenmonoxid mit Wasserstoff und/oder Wasserdampf angeordnet ist.

2. Metallfläche mit thermischer Isolierschicht nach Anspruch 1, **dadurch gekennzeichnet, daß** der Katalysator eines oder mehrere der Metalle Nickel, Kupfer, Eisen, Kobalt, Molybdän, Wolfram, Chrom, Platin, Palladium, Rhodium oder Ruthenium aufweist.

3. Metallfläche mit thermischer Isolierschicht nach Anspruch 1 oder 2, **dadurch gekennzeichnet, daß** die thermische Isolierschicht aus porösem Isolierbeton, porösen Formsteinen oder einer Schicht keramischer Fasern besteht.

4. Metallfläche mit thermischer Isolierschicht nach einem der Ansprüche 1 bis 3, **dadurch gekennzeichnet, daß** die thermische Isolierschicht nahe der zu schützenden Metallfläche mit dem Katalysator versehen ist.

5. Metallfläche mit thermischer Isolierschicht nach Anspruch 1 oder einem der folgenden, **dadurch gekennzeichnet, daß** die Metallfläche für Temperaturen im Bereich von 300 bis 1200°C ausgebildet ist.

## Claims

1. A metal surface which is protected against metal-dusting corrosion, which has an insulating layer of gas-permeable, thermally insulating material, with that side of the thermal insulating layer which is colder in operation being located in the immediate vicinity of the metal surface and that side of the insulating surface which is hotter in operation being heated by a gas stream which is at a temperature in the range from 300 to 1700°C, **characterised in that** a catalyst for reacting carbon monoxide with hydrogen and/or water vapour is located in the region between the metal surface to be protected and the hot side of the insulating layer.

**2.** A metal surface having a thermal insulating layer according to Claim 1, **characterised in that** the catalyst contains one or more of the metals nickel, copper, iron, cobalt, molybdenum, tungsten, chromium, platinum, palladium, rhodium or ruthenium.

**3.** A metal surface having a thermal insulating layer according to Claim 1 or 2, **characterised in that** the thermal insulating layer consists of porous insulating concrete, porous moulded bricks or a layer of ceramic fibres.

**4.** A metal surface having a thermal insulating layer according to one of Claims 1 to 3, **characterised in that** the thermal insulating layer is provided with the catalyst close to the metal surface to be protected.

**5.** A metal surface having a thermal insulating layer according to Claim 1 or one of the following claims, **characterised in that** the metal surface is designed for temperatures in the range from 300 to 1200°C.

**Revendications**

**1.** Surface métallique protégée de la corrosion du type Metal-Dusting, qui comporte une couche isolante en une matière perméable aux gaz et isolante thermiquement, la face la plus froide en fonctionnement de la couche isolante thermiquement se trouvant à proximité immédiate de la surface métallique et la face la plus chaude en fonctionnement de la couche isolante étant chauffée par un courant gazeux qui a une température de l'ordre de 300 à 1700°C, **caractérisée en ce qu'**il est prévu dans la région comprise entre la surface métallique à protéger et la face chaude de la couche isolante un catalyseur catalysant la réaction du monoxyde de carbone sur l'hydrogène et/ou sur la vapeur d'eau.

**2.** Surface métallique à couche isolante thermiquement suivant la revendication 1, **caractérisée en ce que** le catalyseur comporte l'un ou plusieurs des métaux tels que le nickel, le cuivre, le fer, le cobalt, le molybdène, le tungstène, le chrome, le platine, le palladium, le rhodium ou le ruthénium.

**3.** Surface métallique à couche isolante thermiquement suivant la revendication 1 ou 2, **caractérisée en ce que** la couche isolante thermiquement est en béton isolant poreux, en briques moulées poreuses ou en une couche de fibres en céramique.

**4.** Surface métallique à couche isolante thermiquement suivant l'une des revendications 1 à 3, **caractérisée en ce que** la couche isolante thermiquement est munie du catalyseur à proximité de la surface métallique à protéger.

**5.** Surface métallique à couche isolante thermiquement suivant la revendication 1 ou l'une des suivantes, **caractérisée en ce que** la surface métallique est constituée pour des températures de l'ordre de 300 à 1200°C.